# EUROPÄISCHE PATENTSCHRIFT

(11) **EP 4 574 321 B1**
(45) Veröffentlichungstag und Bekanntmachung des Hinweises auf die Patenterteilung: **21.10.2026**
(21) Anmeldenummer: 23217685.9
(22) Anmeldetag: 18.12.2023
(51) Int. Cl.: B23D 29/00, B26D 1/45, B23D 23/00

(54) **VERFAHREN UND TRENNVORRICHTUNG ZUM DURCHTRENNEN EINES LÄNGLICHEN PROFILELEMENTS**
METHOD AND DEVICE FOR CUTTING AN ELONGATED PROFILED ELEMENT
PROCÉDÉ ET DISPOSITIF POUR SECTIONNER UN ÉLÉMENT PROFILÉ ALLONGÉ

(43) Veröffentlichungstag der Anmeldung: 25.06.2025
(73) Patentinhaber: Anton Bauer Werkzeug- und Sondermaschinenbau GmbH, 63500 Seligenstadt (DE)
(72) Erfinder: Bauer, Anton, 63500 Seligenstadt (DE)
(74) Vertreter: Habermann Intellectual Property Partnerschaft von Patentanwälten mbB

(56) Entgegenhaltungen:
- EP-A1- 2 524 756
- DE-A1- 19 926 481
- US-A1- 2022 234 231

## Beschreibung

Die Erfindung betrifft ein Verfahren zum Durchtrennen eines länglichen Profilelements entlang einer Trennlinie durch das Profilelement, wobei in einem Trennschritt eine erste Scherplatte und eine zweite Scherplatte einer Trennvorrichtung, die jeweils eine dem Profilelement und der jeweils anderen Scherplatte zugewandte Schneidkante aufweisen, wobei der Verlauf der Schneidkanten jeweils an einen Verlauf einer der betreffenden Schneidkante zugewandten Außenseite des Profilelements angepasst ist, relativ zueinander längs einer durch die Trennvorrichtung vorgegebenen Trennebene längs einer Trajektorie der Schneidkanten aneinander vorbei verlagert werden, so dass die beiden Schneidkanten das Profilelement längs der Trennlinie abscheren. Die Erfindung betrifft auch eine Trennvorrichtung zum Durchtrennen eines länglichen Profilelements, wobei die Trennvorrichtung eine erste Scherplatte mit einer ersten Schneidkante und eine zweite Scherplatte mit einer zweiten Schneidkante aufweist, wobei die erste und zweite Scherplatte längs einer durch die Trennvorrichtung vorgebbaren Trennebene längs einer Trajektorie relativ zueinander verlagerbar sind, sodass die erste Schneidkante und die zweite Schneidkante das Profilelement entlang einer durch die Trennebene vorgegebenen Trennlinie durch das Profilelement abscheren.

Zahlreiche verschiedene Profilelemente wie beispielsweise Kabelkanäle oder Regenrinnen werden bedingt durch den jeweiligen Herstellungsprozess als längliche Profilelemente mit einer einheitlichen Länge, bzw. Erstreckung längs einer Längsachse der Profilelemente hergestellt. Um solche länglichen Profilelemente für den vorgesehenen Verwendungszweck herzurichten ist es üblich, dass mindestens ein Profilelement abgelängt wird, um das betreffende Profilelement oder eine Kombination aus mehreren Profilelementen mit dem abgelängten Profilelement an die im Einzelfall vorgegebene Gesamtlänge anzupassen. Dabei muss das abzulängende Profilelement durchtrennt und in zwei Profilelementabschnitte zerlegt werden.

Es ist aus der Praxis bekannt, dass ein längliches Profilelement mit einer geeigneten Trennvorrichtung vor Ort, beispielsweise auf einer Baustelle, durchtrennt und auf die gewünschte Länge abgelängt werden kann. Bei einigen Profilelementen können hierfür Handwerkzeuge wie beispielsweise Trennscheren verwendet werden. Es sind auch manuell oder automatisiert betätigbare Trennmaschinen bekannt, mit welchen das Durchtrennen einer größeren Anzahl von Profilelementen erleichtert wird.

Mit einer geeignet ausgebildeten Trennvorrichtung können längliche Profilelemente aus Kunststoff oder Metall entlang einer durch das Profilelement verlaufenden Trennlinie mit einer Schneidkante abgeschert werden, welche längs einer durch die Trennvorrichtung vorgegebenen Trennebene durch das Profilelement hindurch verlagert wird. Aus der Praxis sind auch Trennvorrichtungen mit zwei parallel zu der Trennebene angeordneten Scherplatten bekannt, bei denen eine verlagerbare Scherplatte mit einer daran ausgebildeten Schneidkante gradlinig an einer in der Trennvorrichtung unbeweglich gehaltenen Scherplatte vorbeibewegt wird und dabei das quer zu der Trennebene fixierte Profilelement mit der Schneidkante abgeschert wird. Eine hydraulisch betätigbare Trennvorrichtung ist beispielsweise in der gattungsbildenden DE 199 26 481 A1 gezeigt und beschrieben.

Derartige Trennvorrichtungen eignen sich besonders für im Wesentlichen flache Profilelemente, bei denen die Schneidkante quer zu einer Oberfläche des Profilelements verlagert werden kann und das Profilelement in der Verlagerungsrichtung der Schneidkante bzw. längs einer Trajektorie, mit welcher die Scherplatte mit der Schneidkante durch das Profilelement geführt wird, nur eine geringe Erstreckung aufweist, sodass das Profilelement rasch und zuverlässig abgeschert werden kann.

Beispielsweise bei Kabelkanälen weist das Profilelement üblicherweise quer zu einer Längsrichtung des Profilelements eine C-förmige Querschnittsfläche mit zwei Seitenwänden auf, die rechtwinklig von einer ebenen Kabelkanalbodenwand abstehen. Um ein derart geformtes Profilelement quer zu der Längsrichtung abscheren und durchtrennen zu können kann vorgesehen sein, dass die Schneidkante gradlinig, aber in einem Winkel von 45° relativ zu den beiden Seitenwänden und zu der Kabelkanalbodenwand durch das Profilelement hindurchgeführt wird. Auf diese Weise wird vermieden, dass die Schneidkante über eine größere Distanz parallel zu einer Wandfläche des Profilelements geführt wird, weil der betreffende Bereich des Profilelements dabei regelmäßig verformt, aber nicht zuverlässig abgeschert würde.

Beispielsweise aus EP 2 524 756 A1 oder aus US 2022/0234231 A1 sind manuell betätigbare Trennvorrichtungen zum Durchtrennen von im Wesentlichen C-förmigen Profilelementen bekannt. Bei der ebenso gattungsbildenden EP 2 524 756 A1 ist ein langer Stegabschnitt des Profilelements in einer Zwangsführung für das Profilelement so angeordnet, dass bei einer linearen Verlagerung der Scherplatte die Schneidkante in einem spitzen Winkel relativ zu dem Verlauf des Stegabschnitts durch das Profilelement hindurchgeführt wird. Bei US 2022/0234231 A1 wird die Scherplatte während eines Abschervorgangs mit der Schneidkante derart um eine Schwenkachse verschwenkt, dass die Schneidkante nicht parallel zu einem langen Stegabschnitt des Profilelements verlaufend durch das Profilelement hindurchgeführt wird.

Es sind jedoch auch Profilelemente bekannt, deren Querschnitt nicht ausschließlich rechtwinklig zueinander verlaufende Abschnitte aufweist, wie beispielsweise Regenrinnen mit einer im Wesentlichen halbkreisförmigen Querschnittsfläche, wobei an den beiden Enden der Querschnittsfläche Abkantungen oder abgerundete Bördelränder ausgebildet sein können, die sich über die gesamte Länge des länglichen Profilelements hinweg erstrecken. Derartige Profilelemente lassen sich mit herkömmlichen Trennvorrichtungen nicht zuverlässig abscheren. Vielmehr erfordern Regenrinnen wegen der regelmäßig auftretenden Verformungen bei dem Abscheren eine aufwändige Nachbearbeitung der bei dem Schervorgang erzeugten Stirnseite.

Es wird deshalb als eine Aufgabe der vorliegenden Erfindung angesehen, ein Verfahren zum Durchtrennen von länglichen Profilelementen so auszugestalten, dass auch Profilelemente mit einer komplexen Formgebung zuverlässig durchtrennt werden können, ohne dass ein aufwändiges Nachbearbeiten der Stirnseite des Profilelements erforderlich wird.

Diese Aufgabe wird erfindungsgemäß bei einem Verfahren, bei welchem zwei Scherplatten mit jeweils einer Schneidkante relativ zueinander längs einer durch die Trennvorrichtung vorgegebenen Trennebene längs einer Trajektorie aneinander vorbei verlagert werden, so dass die beiden Schneidkanten das Profilelement längs der Trennlinie abscheren, dadurch gelöst, dass die Trajektorie mindestens einen Scherabschnitt aufweist, in welchem die beiden Schneidkanten das Profilelement über mindestens einen Trennlinienabschnitt abscheren, wobei in dem Scherabschnitt die Trajektorie in einem ersten Trajektorienpunkt eine erste Trajektorienrichtung aufweist, die zu einer zweiten Trajektorienrichtung in mindestens einem zweiten Trajektorienpunkt beabstandet zu dem ersten Trajektorienpunkt einen Trajektorienwinkel von mehr als 5°, vorzugsweise von mehr als 15° und besonders vorzugsweise von mehr als 30° zueinander aufweist.

Die Trajektorie entspricht dem Verlauf einer Projektion von zwei Referenzpunkten auf die Trennebene, wobei ein erster Referenzpunkt auf der Schneidkante der ersten Scherplatte und ein zweiter Referenzpunkt auf der Schneidkante der zweiten Scherplatte angeordnet ist, wobei die beiden Projektionen der beiden Referenzpunkte sich zu Beginn der Verlagerung der beiden Scherplatten relativ zueinander deckungsgleich auf der Trennebene befinden, und wobei sich die beiden Projektionen während der Verlagerung der beiden Scherplatten entlang der Trajektorie über die Trennebene verlagern. Wenn eine der beiden Scherplatten während der Verlagerung ortsfest angeordnet ist, entspricht die Trajektorie dem Verlagerungsweg der Projektion eines Referenzpunkts auf der Schneidkante der beweglichen Scherplatte während der Verlagerung. Die Trajektorienrichtung in einem Trajektorienpunkt entspricht der Richtung einer durch den Trajektorienpunkt verlaufenden Tangente an die Trajektorie. Wenn der Trajektorienpunkt in einem gradlinigen Abschnitt der Trajektorie liegt, entspricht die Trajektorienrichtung in diesem Trajektorienpunkt dem Verlauf der Trajektorie durch diesen Trajektorienpunkt. Wenn der Trajektorienpunkt in einem Abschnitt mit einem gekrümmten Verlauf der Trajektorie liegt entspricht die Trajektorienrichtung der Richtung der durch diesen Trajektorienpunkt verlaufenden Tangente. In dem Scherabschnitt der Trajektorie befinden sich mindestens zwei Trajektorienpunkte, für welche die Trajektorie entweder einen gradlinigen Verlauf oder einen stetig gekrümmten Verlauf durch diese beiden Trajektorienpunkte aufweist, sodass in diesen beiden Trajektorienpunkten eine Trajektorienrichtung eindeutig bestimmt ist und ermittelt werden kann, und die beiden Trajektorienrichtungen nicht parallel zueinander sind.

Auf Grund der unterschiedlichen Ausrichtung der Trajektorie innerhalb des Scherabschnitts der Trajektorie, in dem das Profilelement zumindest über einen Teilabschnitt der Trennlinie, bzw. über den Trennlinienabschnitt hinweg abgeschert wird, kann die Schneidkante relativ zu dem Profilelement so geführt und verlagert werden, dass die an einem Oberflächenabschnitt des Profilelements anliegende Schneidkante nicht parallel zu diesem Oberflächenabschnitt verlagert wird, sondern in einem Winkel quer dazu und damit in diesem Oberflächenabschnitt in das Profilelement hinein und gegebenenfalls vollständig durch das Profilelement hindurch verlagert wird. Dadurch wird der Abschervorgang zumindest über diesen Teilabschnitt der Trennlinie hinweg so durchgeführt, dass das Profilelement über den Trennlinienabschnitt hinweg nicht der Schneidkante ausweichen kann und dabei übermäßig verformt wird, sondern von der Schneidkante abgeschert und durchtrennt wird.

Der Verlauf der Trajektorie ist zweckmäßigerweise an den Verlauf des Profilelements entlang der Trennlinie angepasst, sodass eine gegebenenfalls mehrfach oder kontinuierlich erfolgende Richtungsänderung der Trajektorie so vorgegeben ist, dass die Trajektorie einen möglichst großen Winkel relativ zu dem Oberflächenabschnitt des Profilelements aufweist, der von den beiden Schneidkanten der Scherplatten gerade durchtrennt wird. Für jede Formgebung eines Profilelements kann ein individuell daran angepasster Verlauf der Trajektorie zweckmäßig sein und vorgegeben werden.

In vielen Anwendungsfällen ist es zweckmäßig, dass die relative Verlagerung der beiden Scherplatten zueinander dadurch bewirkt wird, dass eine der beiden Scherplatten unbeweglich gelagert ist und die andere Scherplatte in einer geeignet ausgebildeten Zwangsführung verlagert wird. Es kann allerdings auch vorgesehen sein, dass beide Scherplatten gleichzeitig verlagert werden oder dass beide Scherplatten abwechselnd verlagert werden.

Einer Ausgestaltung des Erfindungsgedankens zufolge kann vorgesehen sein, dass die Trajektorie einen ersten Linearscherabschnitt mit einem gradlinigen ersten Trajektorienverlauf in der ersten Trajektorienrichtung und einen zweiten Linearscherabschnitt mit einem gradlinigen zweiten Trajektorienverlauf in der zweiten Trajektorienrichtung aufweist. In jedem der beiden Linearscherabschnitte können die beiden Scherplatten beispielsweise mit Hilfe einer linearen Zwangsführung relativ zueinander verlagert werden. In jedem der beiden Linearabschnitte kann die Verlagerung der Scherplatten relativ zueinander durch eine manuell betätigte oder mit Hilfe einer Antriebseinrichtung angetriebenen Betätigungsvorrichtung bewirkt werden. So kann beispielsweise für jeden Linearabschnitt ein manuell betätigbarer Betätigungshebel oder ein automatisiert antreibbarer Linearaktor vorgesehen sein, bei dessen Betätigung eine der beiden Scherplatten relativ zu der anderen Scherplatte linear verlagert wird.

Einer besonders vorteilhaften Ausgestaltung des Erfindungsgedankens zufolge ist vorgesehen, dass die Trajektorie einen Krümmungsscherabschnitt aufweist, innerhalb dessen der Trajektorienverlauf einen kontinuierlich gekrümmten Verlauf aufweist. Der Krümmungsscherabschnitt kann sich über einen Trajektorienabschnitt der Trajektorie erstrecken, die in einem anderen Trajektorienabschnitt einen Linearabschnitt aufweist. Für viele Profilelemente kann es vorteilhaft sein, wenn sich der Krümmungsabschnitt über die gesamte Trajektorie hinweg erstreckt, sodass während einer kontinuierlichen Verlagerung der beiden Scherplatten relativ zueinander die Richtung der Trajektorie der Verlagerung kontinuierlich gekrümmt verläuft. Dabei kann die Krümmung der Trajektorie abschnittsweise zunehmen oder abnehmen oder aber konstant bleiben. Durch den kontinuierlich gekrümmten Verlauf der Trajektorie kann die Verlagerung der Scherplatten ebenfalls kontinuierlich durchgeführt werden und beispielsweise mit einer kontinuierlich erfolgenden Betätigung eines Betätigungshebels oder einer Antriebseinrichtung bewirkt werden.

Vorzugsweise ist die Trajektorie und damit der Verlagerungsweg der beiden Scherplatten relativ zueinander an die Formgebung des länglichen Profilelements und insbesondere an den Verlauf der Trennlinie über das Profilelement hinweg angepasst. So kann beispielsweise in einem ersten Trajektorienabschnitt der Trajektorie das Profilelement über weite Trennlinienabschnitte der Trennlinie hinweg abgetrennt werden, die möglichst quer zu der Trajektorie verlaufen. In einem nachfolgenden Trajektorienabschnitt kann die Trajektorie in eine andere Richtung verlaufen, sodass das Profilelement noch über die verbleibenden Trennlinienabschnitte der Trennlinie abgetrennt wird, die bis dahin noch nicht abgetrennt wurden, weil diese Trennlinienabschnitte beispielsweise im Wesentlichen parallel zu der Trajektorie in dem ersten Trajektorienabschnitt verlaufen. Bei einem kontinuierlich gekrümmten Verlauf der Trennlinie, wie es beispielsweise häufig bei halbrunden Regenrinnen vorteilhaft sein dürfte, kann die Trajektorie ebenfalls einen weitgehend oder vollständig gekrümmten Verlauf aufweisen, um den halbrunden Verlauf der Trennlinie über die halbrunde Regenrinne hinweg im Wesentlichen kontinuierlich abzutrennen. Die Trajektorie der Scherplatten verläuft dabei zweckmäßigerweise so, dass die Verlagerung der Schneidkanten während des Abscherens der Regenrinne einen möglichst großen Winkel zu dem Trennlinienverlauf über die Regenrinne hinweg bzw. zu den Außenflächen der Regenrinne während des Abschervorgangs aufweisen.

Zusätzlich zu einer Veränderung des Trajektorienwinkels während der Verlagerung der Scherplatten zueinander kann optional auch vorgesehen sein, dass sich eine Ausrichtung der beiden Scherplatten zueinander während der Verlagerung entlang der Trajektorie um einen Scherplattenwinkel von mehr als 1°, vorzugsweise von mehr als 5° und besonders vorzugsweise von mehr als 8° zueinander ändert. Auf diese Weise kann eine Ausrichtung der beiden Schneidkanten relativ zueinander während des Trennvorgangs verändert werden, sodass sich sowohl ein Winkel zwischen den beiden Schneidkanten als auch ein Winkel zwischen mindestens einer Schneidkante und einer Oberfläche des länglichen Profilelements verändert. Durch die Veränderung des Winkels zwischen einer Schneidkante und der Oberfläche des Profilelements wird bewirkt, dass bei einer Verlagerung der Schneidkante ein Abschnitt der Schneidkante, der zunächst senkrecht zu einem zugeordneten Bereich der Oberfläche des Profilelements ausgerichtet ist, durch die Veränderung des Winkels nicht mehr senkrecht ausgerichtet ist und das Profilelement in diesem Bereich besser abscheren kann.

Insbesondere für die Verlagerung der Scherplatten über den Krümmungsscherabschnitt der Trajektorie hinweg ist optional vorgesehen, dass die erste Scherplatte und die zweite Scherplatte während des Trennschritts über eine kontinuierlich betätigbare Exzentervorrichtung relativ zueinander verlagert werden. Mit Hilfe einer Exzentervorrichtung kann eine der beiden Scherplatten relativ zu der anderen Scherplatte exzentrisch um eine Schwenkachse verlagert werden. Durch eine geeignet ausgebildete Zwangsführung der mit Hilfe der Exzentervorrichtung verlagerten Scherplatte kann bewirkt werden, dass sich die Ausrichtung der verlagerten Scherplatte relativ zu der unbeweglichen Scherplatte kontinuierlich ändert.

Gemäß einer vorteilhaften Ausgestaltung des Erfindungsgedankens ist optional vorgesehen, dass in einem dem Trennschritt vorausgehenden Festlegungsschritt das Profilelement in einer Trennvorrichtung so festgelegt wird, dass die durch die Trennvorrichtung vorgegebene Trennebene entlang der gewünschten Trennlinie durch das Profilelement verläuft. Während des Abscherens des Profilelements werden große Kräfte und Momente über die Schneidkanten auf das Profilelement ausgeübt. Durch eine möglichst zuverlässige Fixierung des Profilelements kann verhindert werden, dass das Profilelement durch die Krafteinwirkung unbeabsichtigt im Bereich der Trennebene verlagert wird und eine unkontrollierte Verformung des Profilelements längs der Trennlinie erfolgt.

Die Erfindung betrifft auch eine Trennvorrichtung zum Durchtrennen eines länglichen Profilelements, wobei die Trennvorrichtung eine erste Scherplatte mit einer ersten Schneidkante und eine zweite Scherplatte mit einer zweiten Schneidkante aufweist, wobei die erste und zweite Scherplatte längs einer durch die Trennvorrichtung vorgebbaren Trennebene längs einer Trajektorie relativ zueinander verlagerbar sind, sodass die die erste Schneidkante und die zweite Schneidkante das Profilelement entlang einer durch die Trennebene vorgegebenen Trennlinie durch das Profilelement abscheren. Bei den aus der Praxis bekannten Trennvorrichtungen wird dabei üblicherweise eine beweglich gelagerte Scherplatte gradlinig relativ zu einer unbeweglich angeordneten Scherplatte verlagert, sodass die beiden einander zugewandten Schneidkanten der beiden Scherplatten längs einer Trennebene aneinander vorbei verlagert werden und ein durch diese Trennebene hindurch angeordnetes Profilelement durchtrennt und abgeschert wird. Bei Profilelementen mit einer komplexen Formgebung kann nicht ausgeschlossen werden, dass ein Abschnitt des Profilelements im Wesentlichen parallel zu der Verlagerungsrichtung der beweglichen Scherplatte verläuft, sodass die Schneidkante in diesem Abschnitt parallel zu einer Oberfläche oder zu beiden einander gegenüberliegenden Außenflächen des Profilelements geführt wird und das Profilelement in diesem Abschnitt dabei überwiegend verformt und nicht durchtrennt wird.

Es wird deshalb als ein weiterer Aspekt der dieser Erfindung zu Grunde liegenden Aufgabe angesehen, eine Trennvorrichtung mit den vorangehend dargelegten Merkmalen so auszugestalten, dass auch Profilelemente mit einer komplexen Formgebung und insbesondere Profilelemente mit einem erheblich gekrümmten Verlauf längs der vorgegebenen Trennlinie möglichst zuverlässig durchtrennt und abgeschert werden, ohne dass das Profilelement in einem an die Trennlinie angrenzenden Bereich übermäßig verformt wird und deshalb eine aufwändige Nachbearbeitung des durchtrennten Profilelements erforderlich wird.

Dieser Aspekt der Aufgabe wird dadurch gelöst, dass die Trennvorrichtung eine Scherplattenverlagerungseinrichtung aufweist, mit welcher die Trajektorie der beiden relativ zueinander verlagerbaren Scherplatten derart vorgebbar ist, dass die Trajektorie mindestens einen Scherabschnitt aufweist, in welchem die beiden Schneidkanten das Profilelement über mindestens einen Trennlinienabschnitt abscheren, wobei in dem Scherabschnitt die Trajektorie in einem ersten Trajektorienpunkt eine erste Trajektorienrichtung aufweist, die zu einer zweiten Trajektorienrichtung in mindestens einem zweiten Trajektorienpunkt beabstandet zu dem ersten Trajektorienpunkt einen Trajektorienwinkel von mehr als 5°, vorzugsweise von mehr als 15° und besonders vorzugsweise von mehr als 30° zueinander aufweist. Die beiden Schneidkanten der Scherplatten werden dem zufolge nicht ausschließlich gradlinig relativ zueinander verlagert, sondern während des Abschervorgangs in mindestens zwei unterschiedlichen Richtungen zueinander verlagert. Auf diese Weise kann erreicht werden, dass auch Trennlinienabschnitte des Profilelements, die parallel zu einem Trajektorienverlauf in einem ersten Trajektorienpunkt verlaufen, durch die dann erfolgende Richtungsänderung während des weiteren Trajektorienverlaufs bzw. während der weiteren Verlagerung der Scherplatten relativ zueinander einen Winkel zu dem Trajektorienverlauf in einem zweiten Trajektorienpunkt aufweisen und dann zuverlässig und ohne übermäßige plastische Verformung abgeschert werden können.

Die Vorgabe einer Trajektorie mit einer sich verändernden Ausrichtung über die Trajektorie hinweg kann mit einfachen konstruktiven Mitteln bewirkt werden. So kann beispielsweise vorgesehen sein, dass die Scherplattenverlagerungseinrichtung eine Zwangsführungseinrichtung aufweist, mit welcher bei einer relativen Verlagerung der beiden Scherplatten zueinander die Trajektorie einen ersten Linearscherabschnitt mit einem gradlinigen ersten Trajektorienverlauf in der ersten Trajektorienrichtung und einen zweiten Linearscherabschnitt mit einem gradlinigen zweiten Trajektorienverlauf in der zweiten Trajektorienrichtung aufweist. In vielen Fällen ist es zweckmäßig, dass eine beweglich gelagerte und von der Zwangsführung geführte Scherplatte relativ zu einer feststehenden Scherplatte verlagert wird. Es kann insbesondere bei zwei gradlinigen Linearscherabschnitten, die unterschiedlich und nicht parallel zueinander ausgerichtet sind, zweckmäßig sein, dass jede der beiden Scherplatten gradlinig verlagerbar gelagert ist, jedoch die beiden Scherplatten in unterschiedliche Richtungen zueinander verlagerbar gelagert sind. Während eines Trennvorgangs kann zuerst die eine und anschließend die zweite Scherplatte verlagert werden. Jede Scherplatte kann mit einem gesonderten Betätigungsmechanismus betätigt und verlagert werden. Es kann auch ein komplexer und beide Verlagerungsrichtungen bewirkender Betätigungsmechanismus vorgesehen sein, der durch eine einmalige Betätigung bzw. durch eine kontinuierliche Betätigung die unterschiedlich gerichtete Verlagerung der beiden Scherplatten bewirken kann.

Einer besonders vorteilhaften Ausgestaltung des Erfindungsgedankens zufolge kann vorgesehen sein, dass die Scherplattenverlagerungseinrichtung eine Zwangsführungseinrichtung aufweist, mit welcher bei einer relativen Verlagerung der beiden Scherplatten zueinander die Trajektorie einen Krümmungsscherabschnitt aufweist, innerhalb dessen der Trajektorienverlauf einen kontinuierlich gekrümmten Verlauf aufweist. Mit einem kontinuierlich gekrümmten Trajektorienverlauf kann beispielsweise ein Profilelement entlang einer ebenfalls kontinuierlich gekrümmt verlaufenden Trennlinie zuverlässig durchtrennt bzw. abgeschert werden. Die Verlagerung der Scherplatten kann so vorgegeben werden, dass die Verlagerung der Schneidkanten während des Durchtrennens des Profilelements entlang der Trennlinie in jedem Abschnitt der Trennlinie einen ausreichend großen Winkel zu de betreffenden Verlauf der Trennlinie bzw. zu den Außenflächen des Profilelements aufweisen, sodass eine übermäßige plastische Verformung verhindert werden kann, die üblicherweise dann auftreten kann, wenn eine Schneidkante parallel zu der Trennlinie bzw. parallel zu einer Oberfläche des Profilelements entlang der Trennlinie geführt und verlagert wird.

Die Verlagerung der beweglich gelagerten Scherplatte kann beispielsweise mit einem manuell betätigbaren Hebel oder mit einem in geeigneter Weise gelenkig verbundenen Zug- oder Druckmechanismus bewirkt werden. Es ist ebenfalls denkbar, dass eine bewegliche Scherplatte oder zwei bewegliche Scherplatten mit einem oder mit mehreren Linearaktoren verlagert werden. Es können auch motorisch betätigte Verlagerungsvorrichtungen vorgesehen sein, mit deren Hilfe ausreichend große Kräfte auf die Scherplatten ausgeübt werden können, um auch Profilelemente mit einer großen Profilwandstärke zuverlässig durchtrennen zu können.

Gemäß einer vorteilhaften Ausgestaltung des Erfindungsgedankens kann vorgesehen sein, dass die Scherplattenverlagerungseinrichtung eine Exzentervorrichtung aufweist, mit welcher die erste Scherplatte und die zweite Scherplatte durch eine kontinuierliche Betätigung der Exzentervorrichtung während des Trennschritts längs der Trajektorie relativ zueinander verlagert werden. Mit einer Exzentervorrichtung kann durch eine Schwenkbewegung der Exzentervorrichtung ein Bereich einer Scherplatte, der exzentrisch zu einer Schwenkachse der Schwenkbewegung mit der Exzentervorrichtung verbunden ist, entlang eines Kreisbogenabschnitts verlagert werden. Auf diese Weise kann mit der Exzentervorrichtung eine kontinuierlich gekrümmte Trajektorie bei der Verlagerung der beiden Scherplatten relativ zueinander bewirkt werden. Zudem kann eine Schwenkbewegung der Exzentervorrichtung in einfacher Weise beispielsweise manuell mit einem drehfest mit der Exzentervorrichtung verbundenen Hebel oder automatisiert mit Hilfe eines über ein Getriebe mit der Exzentervorrichtung verbundenen Elektromotors oder mit einem gelenkig verbundenen Linearaktor so bewirkt werden, dass eine gleichmäßige bzw. kontinuierliche Betätigung der Exzentervorrichtung in die gewünschte Verlagerung der Scherplatten längs der Trajektorie überführt wird.

Zweckmäßigerweise ist optional vorgesehen, dass die Exzentervorrichtung ein Schwenklagerelement aufweist, mit welchem die Exzentervorrichtung in einer ersten Ausnehmung der ersten Scherplatte um eine Schwenkachse verschwenkbar gelagert ist, und dass die Exzentervorrichtung ein starr mit dem Schwenklagerelement in der zweiten Scherplatte schwenkbar gelagertes Exzenterelement aufweist, welches bei einer Verschwenkung der Exzentervorrichtung um die Schwenkachse längs eines Kreisbogenabschnitts um die Schwenkachse verlagert wird. Die Exzentervorrichtung kann beispielsweise zwei Kreisscheiben aufweisen, die exzentrisch zueinander über zwei einander zugewandte Kreisflächen miteinander verbunden sind oder ineinander übergehen. Die beiden Kreisscheiben können einen übereinstimmenden Durchmesser aufweisen und teilweise überlappend zueinander angeordnet sein. Es ist ebenfalls möglich, dass eine der beiden Kreisscheiben einen geringeren Durchmesser als die andere Kreisscheibe hat, und dass die kleinere Kreisscheiben entweder vollständig innerhalb oder teilweise überlappend mit der Kreisfläche der größeren Kreisscheibe angeordnet ist. Durch ein Verschwenken der Exzentervorrichtung um eine durch eine Mittenachse der beiden Kreisscheiben vorgegebene Schwenkachse wird die zweite Kreisscheibe entlang eines Kreisbogenabschnitts verlagert. Eine derartige Exzentervorrichtung kann mit einer Kreisscheibe schwenkbar in einer Scherplatte gelagert sein, und mit der anderen Kreisscheibe schwenkbar in der anderen Scherplatte gelagert sein. Bei einer Schwenkbewegung der Exzentervorrichtung um eine Mittenachse einer Kreisscheibe wird die Scherplatte, in welcher diese Kreisscheibe drehbar gelagert ist, nicht verlagert, während die andere Scherplatte, in welcher die andere Kreisscheibe drehbar gelagert ist, in einem Bereich um die andere Kreisscheibe entlang eines Kreisbogenabschnitts verlagert. Durch eine geeignete Zwangsführung der beweglich gelagerten Scherplatte kann erreicht werden, dass die Schneidkante dieser Scherplatte entlang einer Trajektorie verlagert wird, deren Richtung sich vorgegeben durch die Exzentervorrichtung kontinuierlich verändert. Wenn für einen vollständigen Trennvorgang die Exzentervorrichtung beispielsweise über eine halbe Umdrehung verschwenkt wird, wird die beweglich gelagerte Scherplatte zunächst in eine erste Richtung verlagert, wobei sich die Verlagerungsrichtung dann kontinuierlich entlang eines Kreisbogenabschnitts verändert, bis die Verlagerungsrichtung gegen Ende des Verlagerungsvorgangs in eine entgegengesetzte Richtung wie zu Beginn des Verlagerungsvorgangs gerichtet ist.

Um die Verlagerung der beiden Schneidkanten der beiden Scherplatten relativ zueinander vorgeben zu können ist optional vorgesehen, dass die erste Scherplatte und die zweite Scherplatte über mindestens ein beabstandet von der Exzentervorrichtung angeordnetes Eingriffselement zwangsgeführt sind, welches an einer der beiden Scherplatten angeordnet ist, in Richtung der anderen Scherplatte vorspringt und in ein in der anderen Scherplatte ausgebildetes Zwangsführungslangloch formschlüssig eingreift. Durch eine derart ausgebildete Zwangsführung können die beiden Scherplatten im Wesentlichen durch die Exzentervorrichtung und das Eingriffselement zwangsgeführt werden, ohne dass beispielsweise jede der beiden Scherplatten in einem zugeordneten und geeignet ausgebildeten Rahmen zwangsgeführt ist. Eine Zwangsführung mit einem Eingriffselement kann in besonders einfacher und kostengünstiger Weise bei einer Trennvorrichtung verwirklicht werden, bei welcher eine der beiden Scherplatten unbeweglich angeordnet ist, und die zweite Scherplatte über die Exzentervorrichtung und über das Eingriffselement zwangsgeführt an der ersten Scherplatte gelagert ist.

Es können auch zwei oder mehr Eingriffselemente mit jeweils einem zugeordneten Zwangsführungslangloch vorgesehen sein. Der Verlauf der mehreren Zwangsführungslanglöcher unterscheidet sich in Abhängigkeit von dem jeweiligen Abstand und der Anordnung relativ zu der Exzentervorrichtung jeweils voneinander, sodass die beiden Scherplatten durch die mehreren Eingriffselemente und die jeweils zugeordneten Zwangsführungslanglöcher zuverlässig und mit möglichst geringem Spiel zueinander in der Bewegung relativ zueinander zwangsgeführt werden.

Einer vorteilhaften Ausgestaltung des Erfindungsgedankens zufolge ist optional vorgesehen, dass das Zwangsführungslangloch einen gekrümmten Langlochverlauf aufweist. Auf diese Weise kann eine komplexe Trajektorie bei der Verlagerung der beiden Schneidkanten relativ zueinander vorgegeben werden. Der Langlochverlauf kann beispielsweise zunächst parallel zu der Verlagerungsrichtung verlaufen, welche für den beabstandet dazu angeordneten Bereich der Scherplatte vorgegeben wird, um anschließend nach einer kontinuierlichen Krümmung im Wesentlichen quer zu der Verlagerungsrichtung zu verlaufen, welche für den beabstandet dazu angeordneten Bereich der Scherplatte vorgegeben wird. Es sind auch andere Langlochverläufe denkbar, mit deren Hilfe komplexe Verläufe der Trajektorie bei der Verlagerung der beiden Schneidkanten der beiden Scherplatten relativ zueinander vorgegeben werden können.

Es kann weiterhin vorgesehen sein, dass ein Eingriffselement oder dass mehrere Eingriffselemente mit jeweils einem zugeordneten Abstandsführungsloch in Eingriff steht bzw. stehen. Diese Eingriffselemente tragen nicht zu der Zwangsführung der beiden Scherplatten entlang der Trajektorie bei, sondern dienen lediglich einer Vorgabe eines möglichst gleichmäßigen Abstands der beiden Scherplatten zueinander bzw. sollen lediglich ein unerwünschtes Verkippen der beiden Scherplatten zueinander während des Trennvorgangs verhindern.

Gemäß einer besonders vorteilhaften Ausgestaltung des Erfindungsgedankens ist vorgesehen, dass in einer der beiden Scherplatten oder in beiden Scherplatten eine Profilführungsausnehmung ausgebildet ist, welche an eine Querschnittsfläche des Profilelements längs der Trennlinie durch das Profilelement angepasst ist, sodass das Profilelement durch die Profilführungsausnehmung geführt und während der Verlagerung der Scherplatten relativ zueinander in der Profilführungsausnehmung gelagert ist. Zweckmäßigerweise ist in beiden Scherplatten jeweils eine Profilführungsausnehmung ausgebildet, wobei jede der beiden Profilführungsausnehmungen an eine Querschnittsfläche des Profilelements angepasst ist, sodass ein quer zu der Scherplatte durch die beiden Profilführungsausnehmungen hindurchgeführtes Profilelement allseitig von einem umlaufenden Begrenzungsrand der beiden Profilführungsausnehmungen der Scherplatten umgeben ist und dadurch allseitig festgelegt ist. Die beiden Scherplatten sind zu Beginn eines Trennvorgangs relativ zueinander so angeordnet, dass die beiden Profilführungsausnehmungen deckungsgleich angeordnet sind und das längliche Profilelement quer zu den beiden Scherplatten durch beide Profilführungsausnehmungen hindurchgeführt werden kann, bis eine zwischen den beiden Scherplatten parallel zu den einander zugewandten Oberflächen der Scherplatten verlaufende Trennebene eine in dieser Trennebene und quer zu dem Profilelement verlaufende Trennlinie über eine Oberfläche des Profilelements vorgibt. Wenn die beiden Scherplatten dann relativ zueinander verlagert werden, bilden die beiden Begrenzungsrandabschnitte der beiden Profilführungsausnehmungen, die der jeweils anderen Scherplatte zugewandt sind und in der relativen Verlagerungsrichtung einem gegenüberliegenden Begrenzungsrandabschnitt nachfolgen, jeweils eine Schneidkante, deren Verlauf einem Oberflächenverlauf des Profilelements angepasst ist. Das Profilelement wird während des Trennvorgangs durch die beiden Schneidkanten in den beiden Scherplatten, die aneinander vorbeigeführt werden, abgeschert.

Die erfindungsgemäße Trennvorrichtung ist zweckmäßigerweise so ausgebildet, dass mit der Trennvorrichtung das vorangehend beschriebene Verfahren zum Durchtrennen eines länglichen Profilelements entlang einer Trennlinie durch das Profilelement durchgeführt werden kann.

Nachfolgend werden verschieden Ausführungsbeispiele näher erläutert, die in den Zeichnungen exemplarisch dargestellt sind. Es zeigt:
Fig. 1 eine perspektivische Ansicht von zwei miteinander verbundenen Scherplatten einer Trennvorrichtung zum Durchtrennen von zwei verschiedenen länglichen Profilelementen,
Fig. 2 eine perspektivische Ansicht der in Fig. 1 dargestellten Trennvorrichtung in einer auseinandergezogenen Darstellung,
Fig. 3 eine Draufsicht auf die in den Fig. 1 und 2 dargestellte Trennvorrichtung, wobei nicht sichtbare Ränder von einem Exzenterelement sowie von Zwangsführungslanglöchern und von Abstandsführungslöchern zur Veranschaulichung gestrichelt dargestellt sind,
Fig. 4 eine Schnittansicht durch die in den Fig. 1 bis 3 dargestellte Anordnung von zwei Scherplatten der Trennvorrichtung mit einem quer zu den Scherplatten darin festgelegten länglichen Profilelement,
Fig. 5 bis 12 jeweils eine Draufsicht auf die in den Fig. 1 bis 4 dargestellte Trennvorrichtung in verschiedenen zeitlich aufeinanderfolgenden Zuständen während eines Trennvorgangs,
Fig. 13 bis 18 jeweils eine Draufsicht auf eine abweichend ausgebildete Trennvorrichtung, die an ein abweichend ausgestaltetes Profilelement angepasst ist, in verschiedenen zeitlich aufeinanderfolgenden Zuständen während eines Trennvorgangs,
Fig. 19 bis 21 jeweils eine schematische Ansicht von zwei Scherplatten und einem Verlauf einer Trajektorie, entlang welcher die beiden Scherplatten relativ zueinander während eines Trennvorgangs verlagert werden, und
Fig. 22 eine perspektivische Ansicht eines länglichen Profilelements mit einer schematischen Darstellung einer in einer Trennebene verlaufenden Trennlinie quer zu der Längsrichtung des Profilelements.

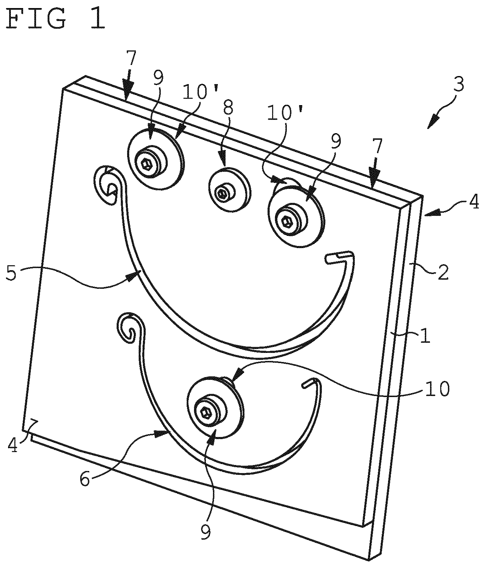

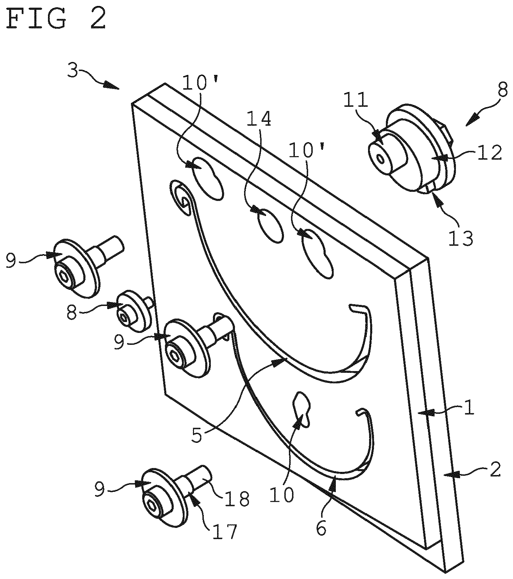

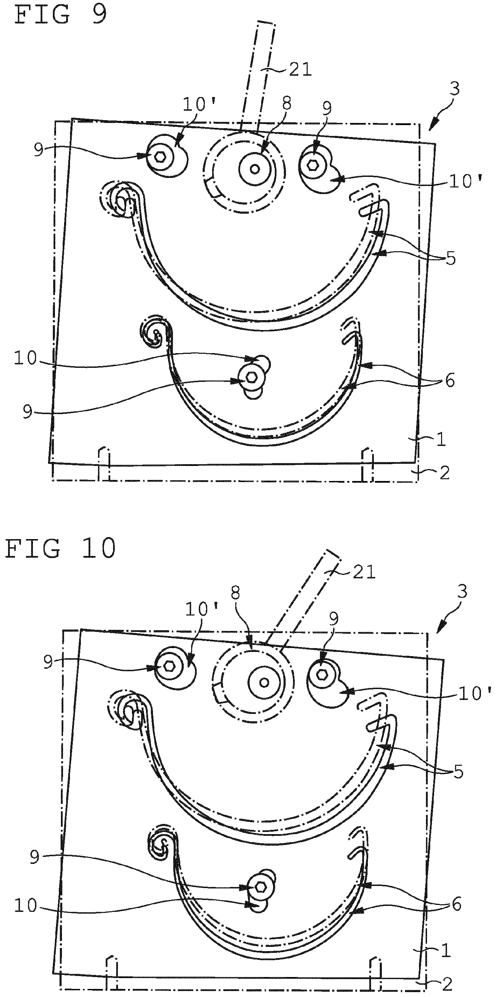

In den Fig. 1 bis 12 sind jeweils zwei Scherplatten 1, 2 einer Trennvorrichtung 3 dargestellt, mit welcher ein in den Figuren nicht dargestelltes längliches Profilelement durchtrennt werden kann. Jede der beiden Scherplatten 1, 2 weist in einer Scherplattenaußenfläche 4 eine durchgehende erste Profilführungsausnehmung 5 und eine zweite Profilführungsausnehmung 6 auf, deren Querschnittsfläche an eine Querschnittsfläche eines zu durchtrennenden Profilelements angepasst ist. Die erste Profilführungsausnehmung 5 ist an ein in den Fig. 1 bis 3 nicht dargestelltes erstes Profilelement und die zweite Profilführungsausnehmung 6 ist an ein ebenfalls nicht dargestelltes zweites Profilelement angepasst, wobei sich die Querschnittsfläche des ersten Profilelements von der Querschnittsfläche des zweiten Profilelements unterscheidet. Mit den in den Fig. 1 bis 12 exemplarisch dargestellten Scherplatten 1, 2 können dem zufolge zwei unterschiedliche Profilelemente durchtrennt werden.

Die zweite Scherplatte 2 ist unbeweglich in einem nicht dargestellten Trägergestell der Trennvorrichtung 3 festgelegt. Die die beiden Scherplatten 1, 2 sind mit den jeweiligen Scherplattenaußenflächen 4 parallel zueinander und parallel zu einer zwischen den beiden Scherplatten 1, 2 verlaufenden Trennebene 7 ausgerichtet sind. Die erste Scherplatte 1 ist über eine Exzentervorrichtung 8 sowie über insgesamt drei Eingriffselemente 9 verlagerbar an der zweiten Scherplatte 2 gelagert, Zu diesem Zweck weist die erste Scherplatte 1 für eines der drei Eingriffselemente 9, die beabstandet zueinander und jeweils beabstandet zu der Exzentervorrichtung 8 und zu den Profilführungsausnehmungen 5, 6 angeordnet sind, ein zugeordnetes Zwangsführungslangloch 10 auf.

Das Zwangsführungsloch 10 ist auf einer der Exzentervorrichtung 8 gegenüberliegenden Seite der der Profilführungsausnehmung 5 angeordnet. Das Zwangsführungsloch 10 bildet für das zugeordnete Eingriffselement 9 eine Zwangsführung, mit welcher eine Trajektorie der Verlagerung der beiden Scherplatten 1, 2 relativ zueinander vorgegeben wird. Das Zwangsführungslangloch 10 weist nicht einen gradlinigen Langlochverlauf, sondern einen gekrümmten Langlochverlauf auf, wobei der Langlochverlauf des Zwangsführungslanglochs 10 an die Position des betreffenden Zwangsführungslanglochs 10 relativ zu der Exzentervorrichtung 8 angepasst ist.

Zwei weitere Eingriffselemente 9 sind jeweils einem Abstandsführungsloch 10' zugeordnet und durch das betreffende Abstandsführungsloch 10' so mit der zweiten Scherplatte 2 verbunden, dass über diese beiden Eingriffselemente 9 ein Abstand der beiden Scherplatten 1, 2 zueinander zuverlässig vorgegeben wird und ein unerwünschtes Verkippen der beiden Scherplatten 1, 2 relativ zueinander während eines Trennvorgangs zuverlässig vermieden werden kann. Die Abstandsführungslöcher 10' weisen eine ausreichend große lichte Weite auf, sodass keine zusätzliche Zwangsführung für die Trajektorie der Verlagerung der beiden Scherplatten 1, 2 relativ zueinander bewirkt wird, da ansonsten die Zwangsführung überbestimmt wäre und unvermeidbare Fertigungstoleranzen eine Verlagerung der beiden Scherplatten 1, 2 relativ zueinander behindern könnten.

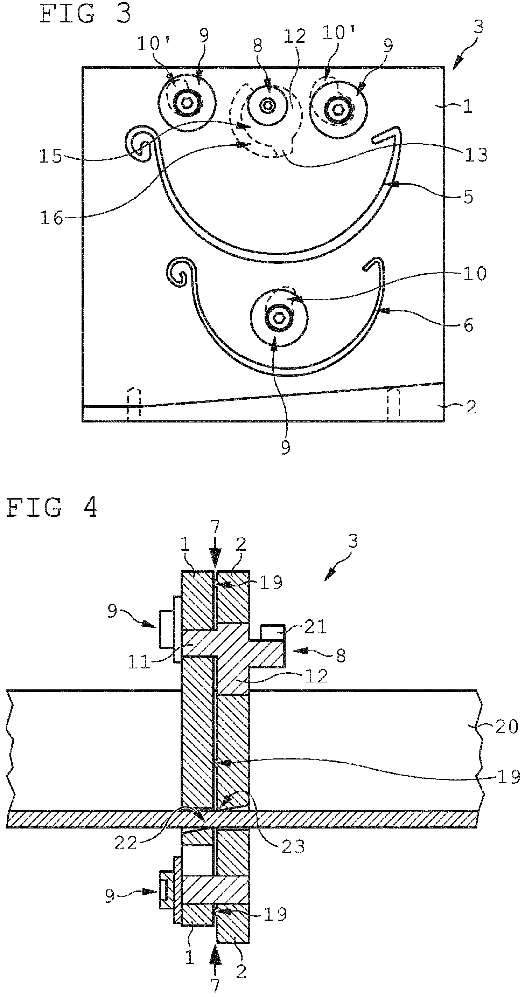

Die Exzentervorrichtung 8 weist eine erste Kreisscheibe 11 und eine zweite Kreisscheibe 12 auf, die exzentrisch zueinander angeordnet sind. Die erste Kreisscheibe 11 weist einen kleineren Durchmesser als die zweite Kreisscheibe 12 auf. An der zweiten Kreisscheibe 12 ist ein radial vorspringender Anschlagsnocken 13 ausgebildet. Die Exzentervorrichtung 8 ist mit der ersten Kreisscheibe 11 in einer passgenau ausgebildeten ersten Ausnehmung 14 in der ersten Scherplatte 1 schwenkbar gelagert und mit der zweiten Kreisscheibe 12 in einer an diese zweite Kreisscheibe 12 angepassten zweiten Ausnehmung 15 in der zweiten Scherplatte 2 verschwenkbar gelagert. Die zweite Ausnehmung 15 weist über einen vorgebbaren Winkelbereich eine radial vorspringende Nut 16 auf, in welche der Anschlagsnocken 13 eingreift. Über die Nut 16, in welche der Anschlagsnocken 13 der Exzentervorrichtung 8 eingreift, kann ein maximaler Schwenkbereich für die zweite Kreisscheibe 12 in der zweiten Scherplatte 2 und damit ein maximaler Schwenkbereich für die Exzentervorrichtung 8 während eines Trennvorgangs vorgegeben werden. In Fig. 3 sind die von der ersten Scherplatte 1 verdeckte zweite Ausnehmung 15 mit der Nut 16 und die darin gelagerte zweite Kreisscheibe 12 mit dem Anschlagsnocken 13 der Exzentervorrichtung 8 zur Veranschaulichung gestrichelt angedeutet.

Die Eingriffselemente 9 weisen Eingriffsbolzen 17 auf, die mit einem Gewindeabschnitt 18 in der zweiten Scherplatte 2 festgelegt sind und durch die Zwangsführungslanglöcher 10 in der ersten Scherplatte 1 hindurchragen. Durch einen radial auch seitlich über das zugeordnete Zwangsführungslangloch vorspringenden Eingriffsbolzenkopf wird die erste Scherplatte 1 parallel zu der zweiten Scherplatte 2 verlagerbar relativ zu der zweiten Scherplatte 2 gehalten.

Zwischen den beiden Scherplatten 1, 2 kann über geeignete Abstandselemente 19, die in der Schnittansicht in Fig. 4 schematisch dargestellt sind, ein geringfügiger Abstand vorgegeben werden, um das Abscheren eines durch die beiden Scherplatten 1, 2 geführten länglichen Profilelements 20 zu erleichtern.

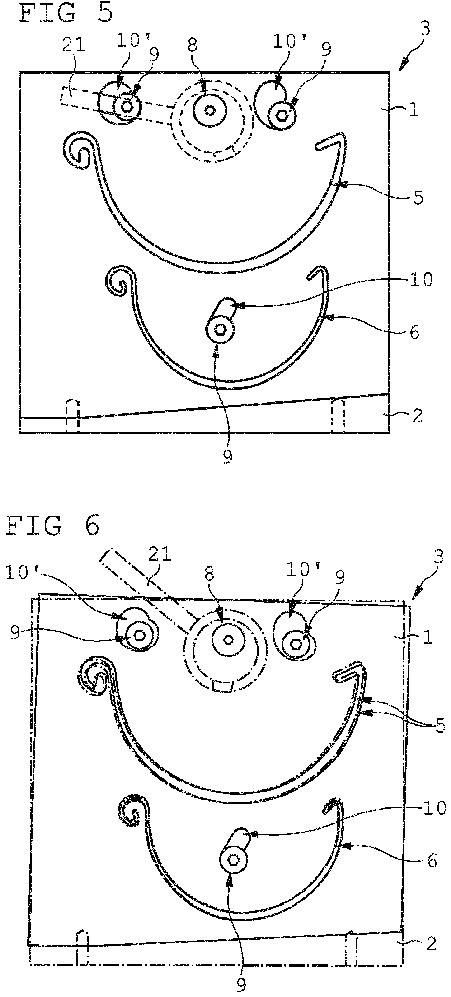

Zu Beginn des Trennvorgangs, wie er in Fig. 4 und auch in Fig. 5 gezeigt ist, befinden sich die beiden Scherplatten 1, 2 sowie die Exzentervorrichtung 8 mit dem daran festgelegten Betätigungshebel 21 in einer Ausgangsstellung. In dieser Ausgangsstellung sind die erste Profilführungsausnehmung 5 und die zweite Profilführungsausnehmung 6 deckungsgleich und vollständig überlappend angeordnet, sodass senkrecht zu der Ausrichtung der beiden Scherplatten 1, 2 das nur in Fig. 4 dargestellte längliche Profilelement 20 durch die über die Querschnittsfläche zugeordnete Profilführungsausnehmung 5 eingeführt werden kann, bis eine quer über das Profilelement in der Trennebene 7 verlaufende Trennlinie, die dem Verlauf der Profilführungsausnehmung 5 folgt, zwischen den beiden Scherplatten 1, 2 angeordnet ist. In dem nachfolgend durchgeführten und in den Fig. 5 bis 12 veranschaulichten Trennvorgang wird die erste Scherplatte 1 durch eine Betätigung des Betätigungshebels 21 relativ zu der feststehenden zweiten Scherplatte 2 verlagert, sodass eine entlang eines Umfangsrands der Profilführungsausnehmung 5 in der ersten Scherplatte 1 verlaufende erste Schneidkante 22 und eine entlang eines Umfangsrands der Profilführungsausnehmung 5 in der zweiten Scherplatte 2 verlaufende zweite Schneidkante 23 relativ zueinander so verlagert werden, dass die beiden Schneidkanten 22, 23 entlang der Trennebene 7 aneinander vorbei bewegt werden und dabei das Profilelement 20 entlang der Trennlinie in der Trennebene 7 abscheren.

In den Fig. 5 bis 11 sind die in den Fig. 1 bis 4 dargestellten Scherpatten 1, 2 sowie der Betätigungshebel 21 in verschiedenen zeitlich aufeinanderfolgenden Zuständen während der Durchführung eines Trennvorgangs dargestellt.

Dabei sind zur Verdeutlichung die beiden durch die erste Scherplatte 1 verdeckten Profilführungsausnehmungen 5, 6 in der zweiten Scherplatte 2 sowie die verdeckten Randbereiche der zweiten Scherplatte 2 und die verdeckten Bereiche der Exzentervorrichtung 8 und des Betätigungshebels 21 sichtbar, wie wenn die erste Scherplatte 1 aus einem transparenten Material hergestellt wäre. Weiterhin sind lediglich einige Bezugszeichen in den Fig. 5 bis 12 dargestellt, wobei für alle nicht dargestellten Bezugszeichen keine Veränderung gegenüber der in den Fig. 1 bis 4 dargestellten Ausgestaltung der Trennvorrichtung 3 vorliegt.

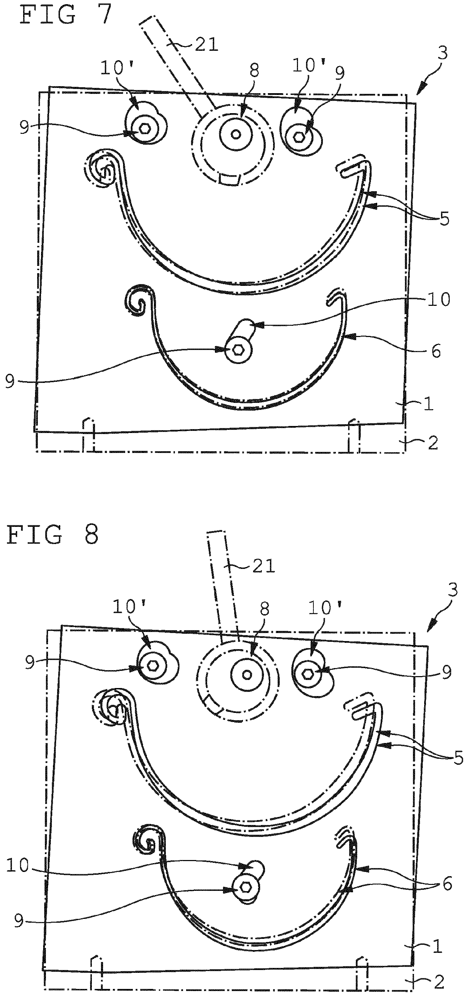

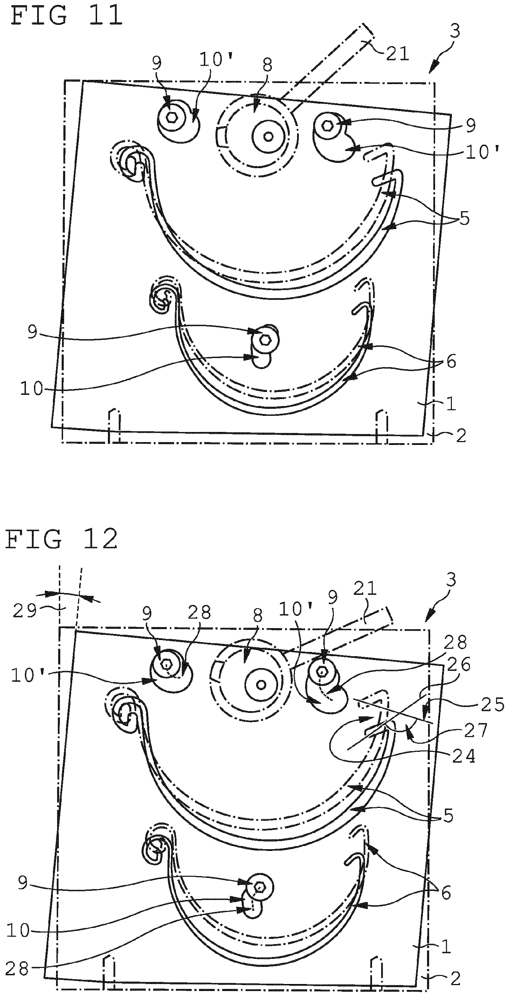

Ausgehend von der in Fig. 5 dargestellten Ausgangsposition, in welcher das längliche Profilelement 20 durch die beiden deckungsgleich angeordneten Profilführungsausnehmungen 5 in der ersten Scherplatte 1 und in der zweiten Scherplatte 2 hindurch geführt und mit der Trennlinie in der Trennebene 7 festgelegt werden kann, wird durch eine über den Betätigungshebel 21 bewirkte Schwenkbewegung der Exzentervorrichtung 8 die erste Scherplatte 1 zunehmend verlagert. Dabei wird mit Bezug auf die Darstellungen in den Fig. 5 bis 12 die Profilführungsausnehmung 5 in der ersten Scherplatte 1 relativ zu der in den Fig. 5 bis 12 dahinter dargestellten Profilführungsausnehmung 5 in der zweiten Scherplatte 2 näherungsweise kreisbogenförmig zuerst nach rechts (Fig. 6 und 7), dann nach unten (Fig. 8 bis 10) und anschließend wieder etwas zurück nach links verlagert wird (Fig. 11 und 12). Während dieser Verlagerung werden die jeweils zugeordneten Profilführungsausnehmungen 5, 6 in der ersten Scherplatte 1 und in der zweiten Scherplatte 2 ausgehend von einer vollständig überlappenden Anordnung in eine weitestgehend nicht überlappende Anordnung verlagert, sodass die beiden Schneidkanten 22, 23 das in diesen Figuren nicht dargestellte Profilelement entlang der in der Trennebene 7 verlaufenden Trennlinie durchtrennen. Während der in den Fig. 5 bis 12 eher horizontal verlaufenden Verlagerung der beiden Scherplatten 1, 2 relativ zueinander werden einander gegenüberliegende Profilseitenwandbereiche des Profilelements 20 durchtrennt, und während der in den Fig. 5 bis 12 eher vertikal verlaufenden Verlagerung überwiegend ein zwischen den beiden Profilseitenwandbereichen befindlicher Profilbodenbereich des Profilelements 20.

In Fig. 12 ist zur Veranschaulichung eine Trajektorie 24 dargestellt, welche die Verlagerung der beiden Scherplatten 1, 2 relativ zueinander verdeutlicht. Die Trajektorie 24 weist einen sich über die gesamte Länge der Trajektorie 24 erstreckenden Krümmungsscherabschnitt auf, in welchem die Trajektorie 24 einen kontinuierlich gekrümmten Trajektorienverlauf aufweist. Für zwei beabstandet angeordnete Trajektorienpunkte 25, 26 weist die Trajektorie 24 jeweils eine voneinander abweichende Trajektorienrichtung auf, die jeweils einer in dem Trajektorienpunkt 25, 26 an die Trajektorie 24 anliegenden Tangente entspricht. Ein Winkel zwischen den jeweiligen Trajektorienrichtungen in den beiden Trajektorienpunkten 25, 26 entspricht einem Trajektorienwinkel 27, der bei dem exemplarisch dargestellten Ausführungsbeispiel größer als 30° ist. Weiterhin ist in Fig. 12 für jedes Zwangsführungslangloch 10 ein Langlochverlauf 28 dargestellt, wobei der Langlochverlauf 28 während des Trennvorgangs jeweils dem Verlagerungsweg des zugeordneten Eingriffselements 9 in dem betreffenden Zwangsführungslangloch 10 entspricht. In Fig. 12 ist auch ein Scherplattenwinkel 29 dargestellt, der die unterschiedliche Ausrichtung der Scherplatten 1, 2 vor und nach der Durchführung des Trennvorgangs verdeutlicht.

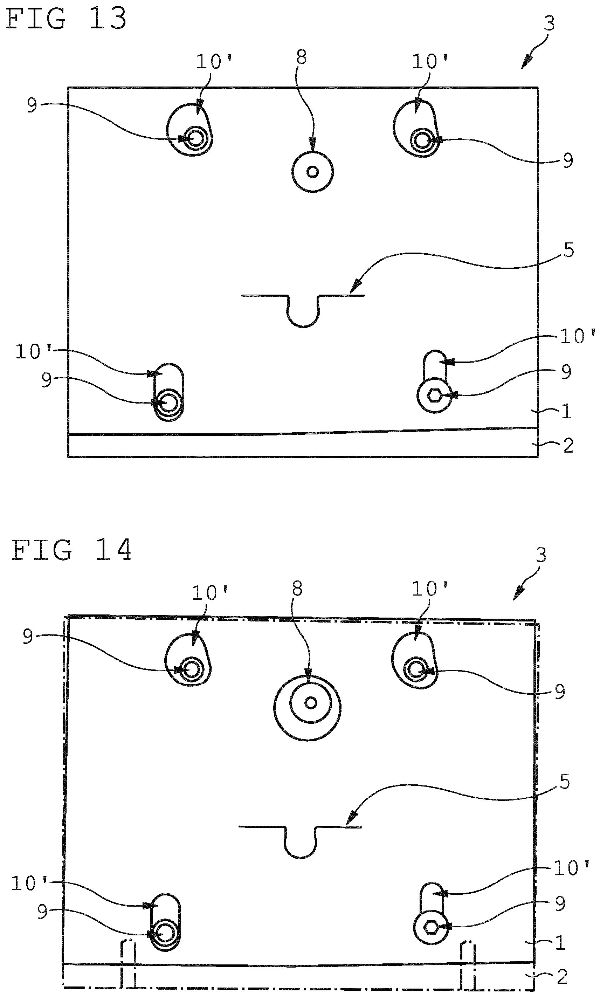

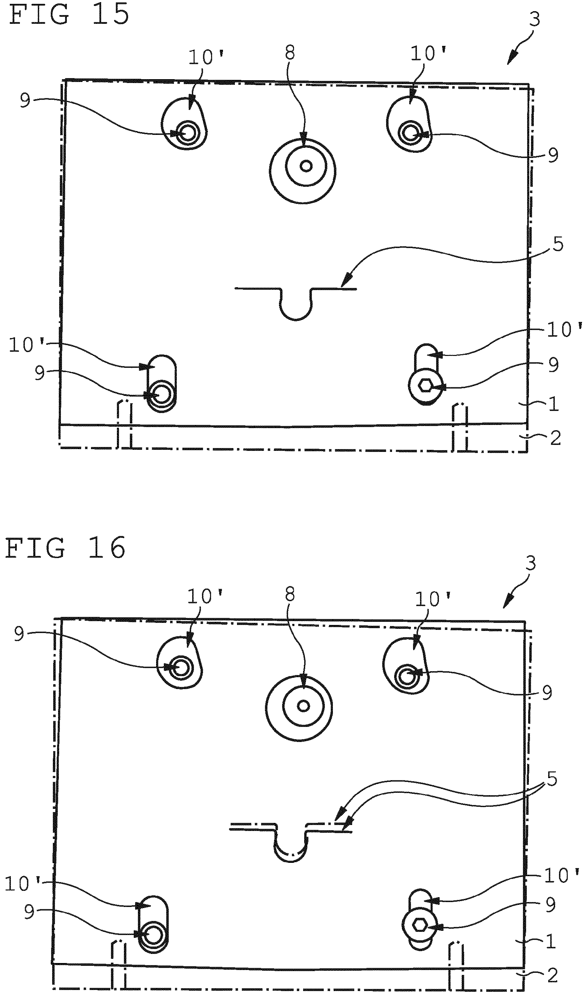

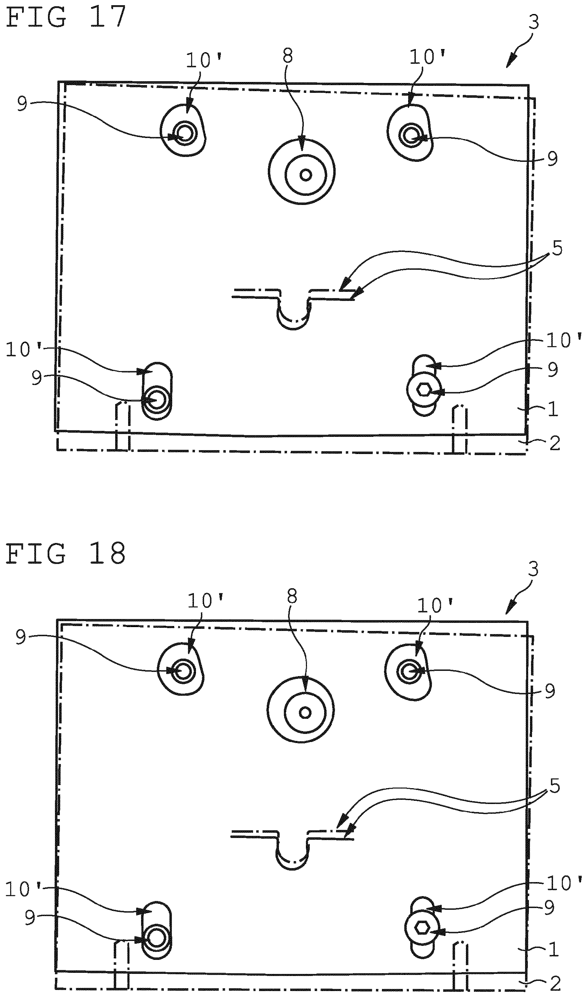

In den Fig. 13 bis 18 ist eine abweichend ausgestaltete Trennvorrichtung 3 mit zwei Scherplatten 1, 2 dargestellt, die jeweils eine identisch ausgebildete, jedoch abweichend zu dem vorangehend beschriebenen Ausführungsbeispiel ausgebildete Profilführungsausnehmung 5 aufweisen. In den Fig. 13 bis 18 sind ebenfalls mehrere zeitlich aufeinanderfolgende Zustände während eines Trennvorgangs dargestellt. Dabei werden wie auch bei dem in den Fig. 5 bis 12 dargestellten Trennvorgang bei einem halbkreisförmigen Profilelement mit seitlich abstehenden ebenen Flanschabschnitten zunächst während einer im Wesentlichen horizontal verlaufenden Verlagerung der beiden Scherplatten 1, 2 relativ zueinander die einander gegenüberliegenden Profilseitenwandbereiche des Profilelements durchtrennt, und danach während der in den Fig. 13 bis 18 eher vertikal verlaufenden Verlagerung überwiegend ein zwischen den beiden Profilseitenwandbereichen befindlicher Profilbodenbereich des Profilelements sowie die beiden seitlich abstehenden ebenen Flanschabschnitte durchtrennt. Abweichend zu dem in den Fig. 1 bis 12 dargestellten Ausführungsbeispiel weisen die Scherplatten 1, 2 bei dem in den Fig. 13 bis 18 dargestellten Ausführungsbeispiel insgesamt vier Eingriffselemente 9 mit einem zugeordneten Zwangsführungslangloch 10 und mit drei zugeordneten Abstandsführungslöchern 10' auf, wobei das Zwangsführungslangloch 10 einen gradlinigen Langlochverlauf aufweist, während die Abstandsführungslöcher 10' jeweils einen gekrümmten Langlochverlauf mit einer größeren lichten Weite aufweisen.

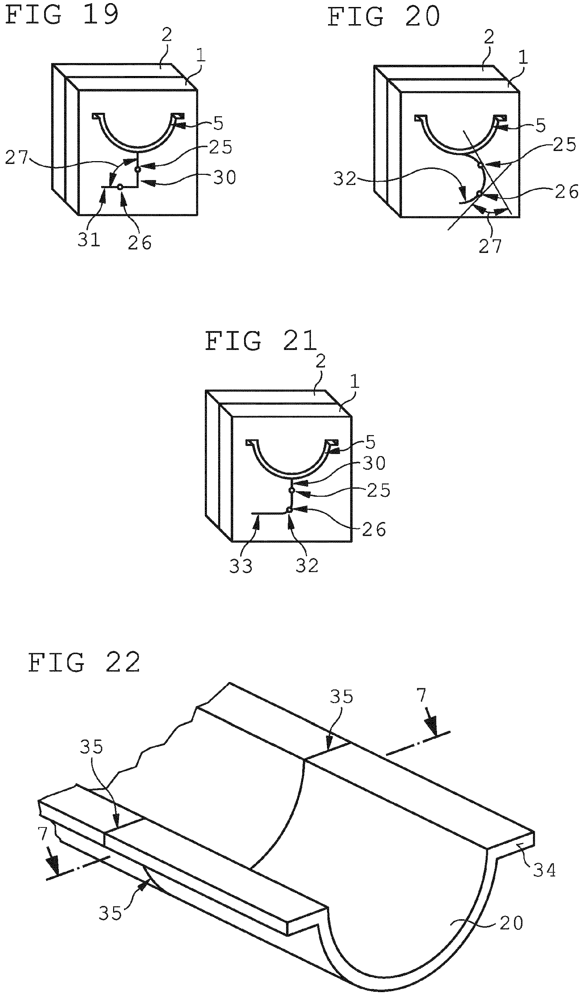

In den Fig. 19 bis 21 sind zur Veranschaulichung verschiedene Verläufe der Trajektorie 24 dargestellt, entlang welcher die beiden Scherplatten 1, 2 während eines Trennvorgangs relativ zueinander verlagert werden können. Bei diesen Ausführungsbeispielen kann jeweils die Scherplatte 1 beweglich gelagert und während des Trennvorgangs relativ zu der ortsfest angeordneten Scherplatte 2 verlagert werden.

Bei dem in Fig. 19 gezeigten Ausführungsbeispiel weist die Trajektorie 24 einen ersten Linearscherabschnitt 30 auf, in welchem sich der erste Trajektorienpunkt 25 befindet, und einen zweiten Linearscherabschnitt 31 auf, in welchem sich der zweite Trajektorienpunkt 26 befindet. Die den beiden Trajektorienpunkten 25, 26 jeweils zugeordneten Trajektorienrichtungen entsprechen der jeweiligen Richtung des ersten bzw. zweiten Linearscherabschnitts 30, 31 und weisen einen Trajektorienwinkel von 90° relativ zueinander auf. Ein derartiger Verlauf der Trajektorie 24 kann beispielsweise durch eine geeignete Scherplattenverlagerungsvorrichtung mit zwei Linearaktoren vorgegeben werden, die nacheinander betätigt werden.

Bei dem in Fig. 20 gezeigten Ausführungsbeispiel weist die Trajektorie 24 einen sich über die gesamte Trajektorie 24 hinweg erstreckenden Krümmungsscherabschnitt 32 mit einer im Wesentlichen gleichbleibenden Krümmung auf. Ein derartiger Verlauf der Trajektorie 24 kann beispielsweise mit Hilfe einer geeigneten Exzentervorrichtung 8 bewirkt werden.

Bei dem in Fig. 31 gezeigten Ausführungsbeispiel weist die Trajektorie 24 zunächst einen ersten Linearscherabschnitt 30, dann einen Krümmungsscherabschnitt 32 und anschließend einen weiteren Linearabschnitt 33 auf. Der Abschervorgang kann dabei im Wesentlichen während des ersten Linearscherabschnitts 30 und dem Krümmungsscherabschnitt 32 durchgeführt werden, sodass der erste Linearscherabschnitt 30 und der Krümmungsscherabschnitt 32 dem Scherabschnitt der Trajektorie 24 entsprechen. Der sich anschließende weitere Linearabschnitt 33 kann beispielsweise für eine vorteilhafte Ausgestaltung der Scherplattenverlagerungseinrichtung, der Zwangsführungseinrichtung oder der Betätigungsvorrichtung zweckmäßig sein, ohne dass dabei ein weiteres Abscheren des Profilelements 20 erfolgt.

In Fig. 22 ist exemplarisch ein als Regenrinne ausgebildetes längliches Profilelement 20 mit einer der Querschnittsfläche des Profilelements 20 entsprechenden Stirnseite 34 dargestellt. Das Profilelement 20 kann durch daran angepasste Profilführungsausnehmungen 5, 6 der beiden Scherplatten 1, 2 so eingeführt werden, dass durch die beiden Scherplatten 1, 2 eine parallel zu der Stirnseite 33 ausgerichtete Trennebene 7 vorgegeben wird. In dieser Trennebene 7 verläuft eine Trennlinie 35 quer über das Profilelement 20. Während eines Trennvorgangs wird dann das Profilelement 20 entlang der Trennlinie 35 durchtrennt. Dabei muss nicht eine an einem Ende der Trennlinie 35 beginnender und an einem gegenüberliegenden Ende der Trennlinie 35 endender und über die Trennlinie 35 hinweg kontinuierlich durchgeführter Abschervorgang erfolgen. Es kann auch vorgegeben sein und für viele verschiedene Formgebungen von Profilelementen 20 vorteilhaft sein, dass das Profilelement 20 an verschiedenen beabstandeten Trennlinienabschnitten über die Trennlinie 35 hinweg gleichzeitig durchtrennt wird, bis die Trennlinienabschnitte sich über die gesamte Trennlinie 35 hinweg erstrecken und das Profilelement 20 vollständig durchtrennt ist.

## Patentansprüche

1. Verfahren zum Durchtrennen eines länglichen Profilelements (20) entlang einer Trennlinie (35) durch das Profilelement (20), wobei in einem Trennschritt eine erste Scherplatte (1) und eine zweite Scherplatte (2) einer Trennvorrichtung (3), die jeweils eine dem Profilelement (20) und der jeweils anderen Scherplatte (2, 1) zugewandte Schneidkante (22, 23) aufweisen, wobei der Verlauf der Schneidkanten (22, 23) jeweils an einen Verlauf einer der betreffenden Schneidkante (22, 23) zugewandten Außenseite des Profilelements (20) angepasst ist, relativ zueinander längs einer durch die Trennvorrichtung (3) vorgegebenen Trennebene (7) längs einer Trajektorie (24) der Schneidkanten (22, 23) aneinander vorbei verlagert werden, so dass die beiden Schneidkanten (22, 23) das Profilelement (20) längs der Trennlinie (35) abscheren, **dadurch gekennzeichnet, dass** die Trajektorie (24) mindestens einen Scherabschnitt aufweist, in welchem die beiden Schneidkanten (22, 23) das Profilelement (20) über mindestens einen Trennlinienabschnitt abscheren, wobei in dem Scherabschnitt die Trajektorie (24) in einem ersten Trajektorienpunkt (25) eine erste Trajektorienrichtung aufweist, die zu einer zweiten Trajektorienrichtung in mindestens einem zweiten Trajektorienpunkt (26) beabstandet zu dem ersten Trajektorienpunkt (25)einen Trajektorienwinkel (27) von mehr als 5°, vorzugsweise von mehr als 15° und besonders vorzugsweise von mehr als 30° zueinander aufweist.

2. Verfahren nach Anspruch 1, **dadurch gekennzeichnet, dass** die Trajektorie (24) einen ersten Linearscherabschnitt (30) mit einem gradlinigen ersten Trajektorienverlauf in der ersten Trajektorienrichtung und einen zweiten Linearscherabschnitt (31) mit einem gradlinigen zweiten Trajektorienverlauf in der zweiten Trajektorienrichtung aufweist.

3. Verfahren nach Anspruch 1 oder Anspruch 2, **dadurch gekennzeichnet, dass** die Trajektorie (24) einen Krümmungsscherabschnitt (32) aufweist, innerhalb dessen der Trajektorienverlauf einen kontinuierlich gekrümmten Verlauf aufweist.

4. Verfahren nach einem der vorausgehenden Ansprüche, **dadurch gekennzeichnet, dass** sich eine Ausrichtung der beiden Scherplatten (1, 2) zueinander während der Verlagerung entlang der Trajektorie (24) um einen Scherplattenwinkel (29) von mehr als 1°, vorzugsweise von mehr als 5° und besonders vorzugsweise von mehr als 8° zueinander ändert.

5. Verfahren nach einem der vorausgehenden Ansprüche, **dadurch gekennzeichnet, dass** die erste Scherplatte (1) und die zweite Scherplatte (2) während des Trennschritts über eine kontinuierlich betätigbare Exzentervorrichtung (8) relativ zueinander verlagert werden.

6. Verfahren nach einem der vorausgehenden Ansprüche, **dadurch gekennzeichnet, dass** in einem dem Trennschritt vorausgehenden Festlegungsschritt das Profilelement (20) in der Trennvorrichtung (3) so festgelegt wird, dass die durch die Trennvorrichtung (3) vorgegebene Trennebene (7) entlang der Trennlinie (35) durch das Profilelement (20) verläuft.

7. Trennvorrichtung (3) zum Durchtrennen eines länglichen Profilelements (20), wobei die Trennvorrichtung (3) eine erste Scherplatte (1) mit einer ersten Schneidkante (22) und eine zweite Scherplatte (2) mit einer zweiten Schneidkante (23) aufweist, wobei die erste und zweite Scherplatte (1, 2) längs einer durch die Trennvorrichtung (3) vorgebbaren Trennebene (7) längs einer Trajektorie (24) relativ zueinander verlagerbar sind, sodass die erste Schneidkante (22) und die zweite Schneidkante (23) das Profilelement (20) entlang einer durch die Trennebene (7) vorgegebenen Trennlinie (35) durch das Profilelement (20) abscheren, **dadurch gekennzeichnet, dass** die Trennvorrichtung (3) eine Scherplattenverlagerungseinrichtung aufweist, mit welcher die Trajektorie (24) der beiden relativ zueinander verlagerbaren Scherplatten (1, 2) derart vorgebbar ist, dass die Trajektorie (24) mindestens einen Scherabschnitt aufweist, in welchem die beiden Schneidkanten (22, 23) das Profilelement (20) über mindestens einen Trennlinienabschnitt abscheren, wobei in dem Scherabschnitt die Trajektorie (24) in einem ersten Trajektorienpunkt (25) eine erste Trajektorienrichtung aufweist, die zu einer zweiten Trajektorienrichtung in mindestens einem zweiten Trajektorienpunkt (26) beabstandet zu dem ersten Trajektorienpunkt einen Trajektorienwinkel (27) von mehr als 5°, vorzugsweise von mehr als 15° und besonders vorzugsweise von mehr als 30° zueinander aufweist.

8. Trennvorrichtung (3) nach Anspruch 7, **dadurch gekennzeichnet, dass** die Scherplattenverlagerungseinrichtung eine Zwangsführungseinrichtung aufweist, mit welcher bei einer relative Verlagerung der beiden Scherplatten (1, 2) zueinander die Trajektorie (24) einen ersten Linearscherabschnitt (30) mit einem gradlinigen ersten Trajektorienverlauf in der ersten Trajektorienrichtung und einen zweiten Linearscherabschnitt (31) mit einem gradlinigen zweiten Trajektorienverlauf in der zweiten Trajektorienrichtung aufweist.

9. Trennvorrichtung (3) nach Anspruch 7 oder Anspruch 8, **dadurch gekennzeichnet, dass** die Scherplattenverlagerungseinrichtung eine Zwangsführungseinrichtung aufweist, mit welcher bei einer relativen Verlagerung der beiden Scherplatten (1, 2) zueinander die Trajektorie (24) einen Krümmungsscherabschnitt (32) aufweist, innerhalb dessen der Trajektorienverlauf einen kontinuierlich gekrümmten Verlauf aufweist.

10. Trennvorrichtung (3) nach einem der Ansprüche 7 bis 9, **dadurch gekennzeichnet, dass** die Scherplattenverlagerungseinrichtung so ausgebildet ist, dass sich eine Ausrichtung der beiden Scherplatten (1, 2) zueinander während der Verlagerung entlang der Trajektorie (24) um einen Scherplattenwinkel (29) von mehr als 1°, vorzugsweise von mehr als 5° und besonders vorzugsweise von mehr als 8° zueinander ändert.

11. Trennvorrichtung (3) nach einem der Ansprüche 7 bis 10, **dadurch gekennzeichnet, dass** die Scherplattenverlagerungseinrichtung eine Exzentervorrichtung (8) aufweist, mit welcher die erste Scherplatte (1) und die zweite Scherplatte (2) durch eine kontinuierliche Betätigung der Exzentervorrichtung (8) während des Trennschritts längs der Trajektorie (24) relativ zueinander verlagert werden.

12. Trennvorrichtung (3) nach Anspruch 11, **dadurch gekennzeichnet, dass** die Exzentervorrichtung (8) ein Schwenklagerelement (11) aufweist, mit welchem die Exzentervorrichtung (8) in einer ersten Ausnehmung (14) der ersten Scherplatte (1) um eine Schwenkachse verschwenkbar gelagert ist, und dass die Exzentervorrichtung (8) ein starr mit dem Schwenklagerelement (11) in der zweiten Scherplatte (2) schwenkbar gelagertes Exzenterelement aufweist, welches bei einer Verschwenkung der Exzentervorrichtung (8) um die Schwenkachse längs eines Kreisbogenabschnitts um die Schwenkachse verlagert wird.

13. Trennvorrichtung (3) nach Anspruch 12, **dadurch gekennzeichnet, dass** die erste Scherplatte (1) und die zweite Scherplatte (2) über mindestens ein beabstandet von der Exzentervorrichtung (8) angeordnetes Eingriffselement (9) zwangsgeführt sind, welches an einer der beiden Scherplatten (1, 2) angeordnet ist, in Richtung der anderen Scherplatte (2, 1) vorspringt und in ein in der anderen Scherplatte (2, 1) ausgebildetes Zwangsführungslangloch (10) formschlüssig eingreift.

14. Trennvorrichtung (3) nach Anspruch 13, **dadurch gekennzeichnet, dass** das Zwangsführungslangloch (10) einen gekrümmten Langlochverlauf (28) aufweist.

15. Trennvorrichtung (3) nach einem der Ansprüche 7 bis 14, **dadurch gekennzeichnet, dass** in einer der beiden Scherplatten (1, 2) oder in beiden Scherplatten (1, 2) eine Profilführungsausnehmung (5, 6) ausgebildet ist, welche an eine Querschnittsfläche des Profilelements (20) längs der Trennlinie (35) durch das Profilelement (20) angepasst ist, sodass das Profilelement (20) durch die Profilführungsausnehmung (5, 6) geführt und während der Verlagerung der Scherplatten (1, 2) relativ zueinander in der Profilführungsausnehmung (5, 6) gelagert ist.

## Claims

1. Method for severing an elongate profile element (20) along a severing line (35) through the profile element (20), wherein, in a severing step, a first shearing plate (1) and a second shearing plate (2) of a severing device (3), which each have a cutting edge (22, 23) facing the profile element (20) and the respective other shearing plate (2, 1), wherein the course of the cutting edges (22, 23) is in each case adapted to a course of an outer side of the profile element (20) facing the respective cutting edge (22, 23), are displaced past one another relative to one another along a severing plane (7) defined by the severing device (3), along a trajectory (24) of the cutting edges (22, 23), such that the two cutting edges (22, 23) shear through the profile element (20) along the severing line (35), **characterised in that** the trajectory (24) has at least one shearing section in which the two cutting edges (22, 23) shear through the profile element (20) over at least one severing-line section, wherein, in the shearing section, the trajectory (24) has, at a first trajectory point (25), a first trajectory direction which forms, with a second trajectory direction at at least one second trajectory point (26) spaced apart from the first trajectory point (25), a trajectory angle (27) of more than 5°, preferably of more than 15° and particularly preferably of more than 30°.

2. Method according to claim 1, **characterised in that** the trajectory (24) has a first linear shearing section (30) with a rectilinear first trajectory course in the first trajectory direction and a second linear shearing section (31) with a rectilinear second trajectory course in the second trajectory direction.

3. Method according to claim 1 or claim 2, **characterised in that** the trajectory (24) has a curved shearing section (32), within which the trajectory course has a continuously curved course.

4. Method according to any one of the preceding claims, **characterised in that** an orientation of the two shearing plates (1, 2) relative to one another changes during the displacement along the trajectory (24) by a shearing-plate angle (29) of more than 1°, preferably of more than 5° and particularly preferably of more than 8°.

5. Method according to any one of the preceding claims, **characterised in that** the first shearing plate (1) and the second shearing plate (2) are displaced relative to one another during the severing step by means of a continuously actuatable eccentric device (8).

6. Method according to any one of the preceding claims, **characterised in that**, in a securing step preceding the severing step, the profile element (20) is secured in the severing device (3) in such a way that the severing plane (7) defined by the severing device (3) extends along the severing line (35) through the profile element (20).

7. Severing device (3) for severing an elongate profile element (20), wherein the severing device (3) has a first shearing plate (1) with a first cutting edge (22) and a second shearing plate (2) with a second cutting edge (23), wherein the first and second shearing plates (1, 2) are displaceable relative to one another along a severing plane (7) definable by the severing device (3), along a trajectory (24), such that the first cutting edge (22) and the second cutting edge (23) shear through the profile element (20) along a severing line (35), defined by the severing plane (7), through the profile element (20), **characterised in that** the severing device (3) has a shearing-plate displacement device by means of which the trajectory (24) of the two shearing plates (1, 2) displaceable relative to one another can be defined in such a way that the trajectory (24) has at least one shearing section in which the two cutting edges (22, 23) shear through the profile element (20) over at least one severing-line section, wherein, in the shearing section, the trajectory (24) has, at a first trajectory point (25), a first trajectory direction which forms, with a second trajectory direction at at least one second trajectory point (26) spaced apart from the first trajectory point, a trajectory angle (27) of more than 5°, preferably of more than 15° and particularly preferably of more than 30°.

8. Severing device (3) according to claim 7, **characterised in that** the shearing-plate displacement device has a positive-guidance device by means of which, during a relative displacement of the two shearing plates (1, 2) with respect to one another, the trajectory (24) has a first linear shearing section (30) with a rectilinear first trajectory course in the first trajectory direction and a second linear shearing section (31) with a rectilinear second trajectory course in the second trajectory direction.

9. Severing device (3) according to claim 7 or claim 8, **characterised in that** the shearing-plate displacement device has a positive-guidance device by means of which, during a relative displacement of the two shearing plates (1, 2) with respect to one another, the trajectory (24) has a curved shearing section (32), within which the trajectory course has a continuously curved course.

10. Severing device (3) according to any one of claims 7 to 9, **characterised in that** the shearing-plate displacement device is configured in such a way that an orientation of the two shearing plates (1, 2) relative to one another changes during the displacement along the trajectory (24) by a shearing-plate angle (29) of more than 1°, preferably of more than 5° and particularly preferably of more than 8°.

11. Severing device (3) according to any one of claims 7 to 10, **characterised in that** the shearing-plate displacement device has an eccentric device (8) by means of which the first shearing plate (1) and the second shearing plate (2) are displaced, by continuous actuation of the eccentric device (8), during the severing step along the trajectory (24) relative to one another.

12. Severing device (3) according to claim 11, **characterised in that** the eccentric device (8) has a pivot bearing element (11) by means of which the eccentric device (8) is pivotably mounted in a first recess (14) of the first shearing plate (1) about a pivot axis, and **in that** the eccentric device (8) has an eccentric element pivotably mounted rigidly with the pivot bearing element (11) in the second shearing plate (2), which, upon pivoting of the eccentric device (8) about the pivot axis, is displaced along a circular-arc section about the pivot axis.

13. Severing device (3) according to claim 12, **characterised in that** the first shearing plate (1) and the second shearing plate (2) are positively guided by means of at least one engagement element (9) which is arranged at a distance from the eccentric device (8), is arranged on one of the two shearing plates (1, 2), projects in the direction of the other shearing plate (2, 1) and engages in a form-fitting manner in a positive-guidance elongated hole (10) formed in the other shearing plate (2, 1).

14. Severing device (3) according to claim 13, **characterised in that** the positive-guidance elongated hole (10) has a curved elongated-hole course (28).

15. Severing device (3) according to any one of claims 7 to 14, **characterised in that** a profile-guiding recess (5, 6) is formed in one of the two shearing plates (1, 2) or in both shearing plates (1, 2), which is adapted to a cross-sectional area of the profile element (20) along the severing line (35) through the profile element (20), such that the profile element (20) is guided by the profile-guiding recess (5, 6) and is mounted in the profile-guiding recess (5, 6) during the displacement of the shearing plates (1, 2) relative to one another.

## Revendications

1. Procédé pour sectionner un élément profilé allongé (20) le long d'une ligne de sectionnement (35) à travers l'élément profilé (20), dans lequel, lors d'une étape de sectionnement, une première plaque de cisaillement (1) et une deuxième plaque de cisaillement (2) d'un dispositif de sectionnement (3), qui présentent chacune une arête de coupe (22, 23) tournée vers l'élément profilé (20) et vers l'autre plaque de cisaillement respective (2, 1), le tracé des arêtes de coupe (22, 23) étant adapté dans chaque cas à un tracé d'une face extérieure de l'élément profilé (20) tournée vers l'arête de coupe concernée (22, 23), sont déplacées l'une par rapport à l'autre en passant l'une à côté de l'autre suivant un plan de sectionnement (7) défini par le dispositif de sectionnement (3), le long d'une trajectoire (24) des arêtes de coupe (22, 23), de sorte que les deux arêtes de coupe (22, 23) cisaillent l'élément profilé (20) le long de la ligne de sectionnement (35), **caractérisé en ce que** la trajectoire (24) présente au moins un tronçon de cisaillement dans lequel les deux arêtes de coupe (22, 23) cisaillent l'élément profilé (20) sur au moins un tronçon de ligne de sectionnement, la trajectoire (24) présentant, dans le tronçon de cisaillement, en un premier point de trajectoire (25), une première direction de trajectoire qui forme, avec une deuxième direction de trajectoire en au moins un deuxième point de trajectoire (26) espacé du premier point de trajectoire (25), un angle de trajectoire (27) de plus de 5°, de préférence de plus de 15° et de manière particulièrement préférée de plus de 30°.

2. Procédé selon la revendication 1, **caractérisé en ce que** la trajectoire (24) présente un premier tronçon de cisaillement linéaire (30) avec un premier tracé de trajectoire rectiligne dans la première direction de trajectoire et un deuxième tronçon de cisaillement linéaire (31) avec un deuxième tracé de trajectoire rectiligne dans la deuxième direction de trajectoire.

3. Procédé selon la revendication 1 ou la revendication 2, **caractérisé en ce que** la trajectoire (24) présente un tronçon de cisaillement courbe (32), à l'intérieur duquel le tracé de trajectoire présente un tracé continûment courbe.

4. Procédé selon l'une quelconque des revendications précédentes, **caractérisé en ce qu'**une orientation des deux plaques de cisaillement (1, 2) l'une par rapport à l'autre varie pendant le déplacement le long de la trajectoire (24) d'un angle de plaque de cisaillement (29) de plus de 1°, de préférence de plus de 5° et de manière particulièrement préférée de plus de 8°.

5. Procédé selon l'une quelconque des revendications précédentes, **caractérisé en ce que** la première plaque de cisaillement (1) et la deuxième plaque de cisaillement (2) sont déplacées l'une par rapport à l'autre pendant l'étape de sectionnement au moyen d'un dispositif excentrique (8) actionnable en continu.

6. Procédé selon l'une quelconque des revendications précédentes, **caractérisé en ce que**, lors d'une étape de fixation précédant l'étape de sectionnement, l'élément profilé (20) est fixé dans le dispositif de sectionnement (3) de telle sorte que le plan de sectionnement (7) défini par le dispositif de sectionnement (3) s'étend le long de la ligne de sectionnement (35) à travers l'élément profilé (20).

7. Dispositif de sectionnement (3) pour sectionner un élément profilé allongé (20), dans lequel le dispositif de sectionnement (3) comporte une première plaque de cisaillement (1) avec une première arête de coupe (22) et une deuxième plaque de cisaillement (2) avec une deuxième arête de coupe (23), dans lequel les première et deuxième plaques de cisaillement (1, 2) sont déplaçables l'une par rapport à l'autre suivant un plan de sectionnement (7) pouvant être défini par le dispositif de sectionnement (3), le long d'une trajectoire (24), de sorte que la première arête de coupe (22) et la deuxième arête de coupe (23) cisaillent l'élément profilé (20) le long d'une ligne de sectionnement (35), définie par le plan de sectionnement (7), à travers l'élément profilé (20), **caractérisé en ce que** le dispositif de sectionnement (3) comporte un dispositif de déplacement des plaques de cisaillement au moyen duquel la trajectoire (24) des deux plaques de cisaillement (1, 2) déplaçables l'une par rapport à l'autre peut être définie de telle sorte que la trajectoire (24) présente au moins un tronçon de cisaillement dans lequel les deux arêtes de coupe (22, 23) cisaillent l'élément profilé (20) sur au moins un tronçon de ligne de sectionnement, la trajectoire (24) présentant, dans le tronçon de cisaillement, en un premier point de trajectoire (25), une première direction de trajectoire qui forme, avec une deuxième direction de trajectoire en au moins un deuxième point de trajectoire (26) espacé du premier point de trajectoire, un angle de trajectoire (27) de plus de 5°, de préférence de plus de 15° et de manière particulièrement préférée de plus de 30°.

8. Dispositif de sectionnement (3) selon la revendication 7, **caractérisé en ce que** le dispositif de déplacement des plaques de cisaillement comporte un dispositif de guidage forcé au moyen duquel, lors d'un déplacement relatif des deux plaques de cisaillement (1, 2) l'une par rapport à l'autre, la trajectoire (24) présente un premier tronçon de cisaillement linéaire (30) avec un premier tracé de trajectoire rectiligne dans la première direction de trajectoire et un deuxième tronçon de cisaillement linéaire (31) avec un deuxième tracé de trajectoire rectiligne dans la deuxième direction de trajectoire.

9. Dispositif de sectionnement (3) selon la revendication 7 ou la revendication 8, **caractérisé en ce que** le dispositif de déplacement des plaques de cisaillement comporte un dispositif de guidage forcé au moyen duquel, lors d'un déplacement relatif des deux plaques de cisaillement (1, 2) l'une par rapport à l'autre, la trajectoire (24) présente un tronçon de cisaillement courbe (32), à l'intérieur duquel le tracé de trajectoire présente un tracé continûment courbe.

10. Dispositif de sectionnement (3) selon l'une quelconque des revendications 7 à 9, **caractérisé en ce que** le dispositif de déplacement des plaques de cisaillement est conçu de telle sorte qu'une orientation des deux plaques de cisaillement (1, 2) l'une par rapport à l'autre varie pendant le déplacement le long de la trajectoire (24) d'un angle de plaque de cisaillement (29) de plus de 1°, de préférence de plus de 5° et de manière particulièrement préférée de plus de 8°.

11. Dispositif de sectionnement (3) selon l'une quelconque des revendications 7 à 10, **caractérisé en ce que** le dispositif de déplacement des plaques de cisaillement comporte un dispositif excentrique (8) au moyen duquel la première plaque de cisaillement (1) et la deuxième plaque de cisaillement (2) sont déplacées, par un actionnement continu du dispositif excentrique (8), pendant l'étape de sectionnement le long de la trajectoire (24) l'une par rapport à l'autre.

12. Dispositif de sectionnement (3) selon la revendication 11, **caractérisé en ce que** le dispositif excentrique (8) comporte un élément de palier de pivotement (11) au moyen duquel le dispositif excentrique (8) est monté pivotant dans un premier évidement (14) de la première plaque de cisaillement (1) autour d'un axe de pivotement, et **en ce que** le dispositif excentrique (8) comporte un élément excentrique monté pivotant de manière rigide avec l'élément de palier de pivotement (11) dans la deuxième plaque de cisaillement (2), lequel, lors d'un pivotement du dispositif excentrique (8) autour de l'axe de pivotement, est déplacé le long d'un tronçon d'arc de cercle autour de l'axe de pivotement.

13. Dispositif de sectionnement (3) selon la revendication 12, **caractérisé en ce que** la première plaque de cisaillement (1) et la deuxième plaque de cisaillement (2) sont guidées de manière forcée au moyen d'au moins un élément d'engagement (9) qui est disposé à distance du dispositif excentrique (8), est disposé sur l'une des deux plaques de cisaillement (1, 2), fait saillie en direction de l'autre plaque de cisaillement (2, 1) et s'engage par complémentarité de forme dans un trou oblong de guidage forcé (10) formé dans l'autre plaque de cisaillement (2, 1).

14. Dispositif de sectionnement (3) selon la revendication 13, **caractérisé en ce que** le trou oblong de guidage forcé (10) présente un tracé courbe de trou oblong (28).

15. Dispositif de sectionnement (3) selon l'une quelconque des revendications 7 à 14, **caractérisé en ce qu'**un évidement de guidage de profilé (5, 6) est formé dans l'une des deux plaques de cisaillement (1, 2) ou dans les deux plaques de cisaillement (1, 2), lequel est adapté à une surface de section transversale de l'élément profilé (20) le long de la ligne de sectionnement (35) à travers l'élément profilé (20), de sorte que l'élément profilé (20) est guidé par l'évidement de guidage de profilé (5, 6) et est monté dans l'évidement de guidage de profilé (5, 6) pendant le déplacement des plaques de cisaillement (1, 2) l'une par rapport à l'autre.
